# EUROPEAN PATENT APPLICATION

(11) **EP 4 678 606 A1**
(43) Date of publication of application: **14.01.2026**
(21) Application number: 24770735.9
(22) Date of filing: 07.03.2024
(51) Int. Cl.: C03C 14/00, C03C 1/02, C03C 3/087

(54) **METAL FINE PARTICLE-CONTAINING GLASS AND METHOD FOR MANUFACTURING SAME**

(30) Priority: 10.03.2023 JP 2023037657
(71) Applicant: AGC INC., Chiyoda-ku, Tokyo 1008405 (JP)
(72) Inventor: HANAWA, Yu, Tokyo 100-8405 (JP); AKIBA, Shusaku, Tokyo 100-8405 (JP)
(74) Representative: Müller-Boré & Partner Patentanwälte PartG mbB
(86) International application number: PCT/JP2024/008899
(87) International publication number: WO 2024/190629

(57) **Abstract**

The present invention provides a metal fine particle-containing glass from which it is possible to obtain a high quality glass in which unnecessary coloring and defects which occur during manufacturing when being subjected to an oxidation treatment are suppressed. A metal fine particle-containing glass according to the present invention contains metal fine particles. The number densities of the metal fine particles for respective particle sizes in an arbitrary cross-section are: 0-1000 particles/mm² for particles having a diameter greater than 1 µm but not greater than 5 µm; 0-30 particles/mm² for particles having a diameter greater than 5 µm but not greater than 10 µm; 0-5 particles/mm² for particles having a diameter greater than 10 µm but not greater than 100 µm; and 0-0.5 particles/mm² for particles having a diameter greater than 100 µm but not greater than 500 µm. Particles having a diameter greater than 500 µm are substantially not contained. The proportion of area occupied by the metal fine particles in an arbitrary cross-section is 0-0.15% with respect to the total area.

## Description

### TECHNICAL FIELD

The present invention relates to a fine metal particle-containing glass and a production method therefor.

### BACKGROUND ART

From the viewpoint of resource recycling and greenhouse gas reduction, recycling of a glass product is desired. However, at present, most of discarded glass products and some of defective glasses generated in an intermediate step are discarded without being recycled.

The reason is, for example, as follows.
(1) When a glass mixed with a foreign substance (hereinafter, also referred to as an external foreign substance) such as a metal, a ceramic, or an organic substance is charged into a melting furnace, various defects in production are generated, and thus it is difficult to recycle the glass.
(2) Since colored glasses include glasses having various colors and it is difficult to individually collect the glasses, once the glasses are mixed with each other, it is difficult to horizontally recycle the glasses to the same colored glass as before recycling.
(3) Since a solar panel (hereinafter, also referred to as a PV panel) glass contains Sb, the glass is colored in a float bath, and thus it is difficult to recycle the glass to a plate glass by a float method.

That is, in the case where a waste glass or a defective glass contains an external foreign substance or the glass contains a coloring component or an unnecessary component, even when an attempt is made to produce a glass using the above as a raw material, the glass to be obtained may have a defect in production or unnecessary coloring.

With respect to this, for example, Non Patent Literature 1 discloses that a phase separation phenomenon of an alkali-containing borosilicate glass is used for a method for removing a Fe component, which is a coloring component, in a glass.

### CITATION LIST

### NON PATENT LITERATURE

Non Patent Literature 1: Takuya Imaoka and three others, "Material Recycling of Municipal Waste Slags by Using Phase Separation of Glass", Journal of The Faculty of Environmental Science and Technology, Okayama University, 12(1), (2007) 161-165.

### SUMMARY OF INVENTION

### TECHNICAL PROBLEM

However, in the case of removing the coloring component or the like in the glass using the phase separation phenomenon as described in Non Patent Literature 1, the step is complicated, and the efficiency may be poor. In addition, useful components such as an alkali metal component are also removed at the same time.

In view of the above, an object of the present invention is to provide a fine metal particle-containing glass in which an unnecessary substance or an unnecessary component is appropriately removed from a glass containing an external foreign substance or a glass containing a coloring component or an unnecessary component, and from which a high quality glass having few defects in production and reduced unnecessary coloring during an oxidation treatment can be obtained.

### SOLUTION TO PROBLEM

That is, the present invention relates to the following 1 to 12.
1. A fine metal particle-containing glass, which is a glass containing fine metal particles, in which
   a number density of the fine metal particles for each particle diameter in any cross section of the glass is in the following ranges, and
   an area ratio of the fine metal particles in the any cross section of the glass is 0% to 0.15% with respect to a total area of the any cross section,
   particle diameter of more than 1 µm and 5 µm or less: 0 to 1,000 particles/mm²,
   particle diameter of more than 5 µm and 10 µm or less: 0 to 30 particles/mm²,
   particle diameter of more than 10 µm and 100 µm or less: 0 to 5 particles/mm²,
   particle diameter of more than 100 µm and 500 µm or less: 0 to 0.5 particles/mm²,
   particle diameter of more than 500 µm: substantially not contained.
2. The fine metal particle-containing glass according to the above 1, in which an absolute value ABS (Tv-T₁₁₀₀) of a difference between a visible light transmittance Tv at a thickness of 2 mm and a transmittance T₁₁₀₀ at a wavelength of 1100 nm at a thickness of 2 mm is 30% or less.
3. The fine metal particle-containing glass according to the above 1 or 2, in which the fine metal particles contain at least one element selected from the group consisting of Fe, Si, Co, Cr, Ni, Ti, P, Sb, W, and Nb.
4. The fine metal particle-containing glass according to the above 1 or 2, in which when a melt obtained by melting the fine metal particle-containing glass is subjected to an oxidation treatment by bubbling using an atmosphere at 1,500°C for 120 minutes to obtain a glass, the obtained glass has a visible light transmittance Tv of 50% or more at a thickness of 2 mm.
5. The fine metal particle-containing glass according to the above 1 or 2, in which
   in terms of mass% based on oxides,
   when a melt obtained by melting the fine metal particle-containing glass is subjected to an oxidation treatment by bubbling using an atmosphere at 1,500°C for 120 minutes to obtain a glass,
      a ratio NWF_{after/before} is 0.40 to 1.50, the ratio NWF_{after/before} being a ratio of a total content of a network former oxide in the obtained glass to a total content of the network former oxide in the fine metal particle-containing glass, and
      a ratio NWM_{after/before} is 0.60 to 2.00, the ratio NWM_{after/before} being a ratio of a total content of a network modifier oxide in the obtained glass to a total content of the network modifier oxide in the fine metal particle-containing glass.
6. The fine metal particle-containing glass according to the above 1 or 2, in which an average concentration of Fe₂O₃ in the fine metal particle-containing glass is 0.001% to 0.5% in terms of mass% based on oxides.
7. The fine metal particle-containing glass according to the above 1 or 2, in which when a melt obtained by melting the fine metal particle-containing glass is subjected to an oxidation treatment by bubbling using an atmosphere at 1,500°C for 30 minutes to obtain a glass, the obtained glass does substantially not contain fine metal particles having a particle diameter of 1 µm or more.
8. The fine metal particle-containing glass according to the above 1 or 2, in which a shape occupying 80% or more on a mass basis is a crushed piece shape or a spherical shape having a size of 1 mm to 100 mm.
9. A method for producing a fine metal particle-containing glass, which is a method for producing the fine metal particle-containing glass according to the above 1 or 2, the method including:
   obtaining a melt by melting a glass-containing raw material containing a glass; and
   subjecting the melt to a reduction treatment.
10. The method for producing a fine metal particle-containing glass according to the above 9, in which in the reduction treatment, at least one selected from the group consisting of a simple substance and a compound that contain at least one element selected from the group consisting of C, Al, Si, Ca, Ti, and H, and a mixture containing the simple substance and the compound is used as a reducing agent.
11. The method for producing a fine metal particle-containing glass according to the above 10, in which the reducing agent contains at least one selected from the group consisting of a simple substance and a compound that contain at least one element selected from the group consisting of C, Si, and H, and a mixture containing the simple substance and the compound.
12. The method for producing a fine metal particle-containing glass according to the above 9, in which a treatment temperature in the reduction treatment is 1,300°C to 1,800°C.

### ADVANTAGEOUS EFFECTS OF INVENTION

Since, in the fine metal particle-containing glass according to the present invention, an unnecessary substance or an unnecessary component is appropriately removed from a glass containing an external foreign substance or a glass containing a coloring component or an unnecessary component, and fine metal particles having a specified particle diameter distribution are contained, a high quality glass having few defects in production and reduced unnecessary coloring during an oxidation treatment can be obtained.

### BRIEF DESCRIPTION OF DRAWINGS

[FIG. 1A] FIG. 1A is a diagram showing an example of an image obtained by capturing a fine metal particle-containing glass according to the present embodiment at a magnification of 200 times by a predetermined method.
[FIG. 1B] FIG. 1B is a diagram showing an image obtained by performing image processing on FIG. 1A.
[FIG. 2A] FIG. 2A is a diagram showing an example of an image obtained by capturing the fine metal particle-containing glass according to the present embodiment at a magnification of 1,000 times by a predetermined method.
[FIG. 2B] FIG. 2B is a diagram showing an image obtained by performing image processing on FIG. 2A.

### DESCRIPTION OF EMBODIMENTS

Hereinafter, the present invention is described in detail, but the present invention is not limited to the following embodiment, and can be freely modified and implemented without departing from the gist of the present invention.

In the present description, "to" indicating a numerical range is used in the sense of including the numerical values set forth before and after the "to" as a lower limit value and an upper limit value. Moreover, in the present description, "mass" is synonymous with "weight".

A fine metal particle-containing glass according to an embodiment of the present invention is a glass containing fine metal particles, in which a number density of the fine metal particles for each particle diameter is in the following ranges, and an area ratio of the fine metal particles in any cross section of the glass is 0% to 0.15% with respect to a total area the any cross section.
Particle diameter of more than 1 µm and 5 µm or less: 0 to 1,000 particles/mm²
Particle diameter of more than 5 µm and 10 µm or less: 0 to 30 particles/mm²
Particle diameter of more than 10 µm and 100 µm or less: 0 to 5 particles/mm²
Particle diameter of more than 100 µm and 500 µm or less: 0 to 0.5 particles/mm²
Particle diameter of more than 500 µm: substantially not contained

In the present description, the fine metal particles in the glass are observed by epi-illumination using an optical microscope (digital microscope). By using the epi-illumination, observation focusing on the surface is easy, and since the fine metal particles reflect light, observation at a high contrast is possible. Specifically, the fine metal particle-containing glass is polished at any cross section and then imaged at 16 positions at magnifications of 200 times and 1,000 times, respectively. By performing image analysis using image analysis software, an area of each particle included in a total of 32 captured images is calculated, and a diameter obtained when the area of the obtained particle is assumed to be a sphere is defined as the particle diameter. Note that, it is confirmed that the fine metal particles have a substantially spherical shape from the observation by scanning electron microscope-energy dispersive X-ray spectroscopy (SEM-EDX) to be described later, and that the fine metal particles match the observation image obtained using the optical microscope. From the viewpoint of measurement accuracy, only particles having a particle diameter of more than 5 µm are counted at a magnification of 200 times, and only particles having a particle diameter of more than 1 µm to 5 µm are counted at a magnification of 1,000 times. In addition, a particle diameter distribution of each image is obtained by image analysis, and the number density for each particle diameter of the fine metal particles is obtained by dividing the number of the observed specific particle diameter by a total area of the field of view of the observed image. In addition, the area ratio of the fine metal particles is obtained by dividing a total area of the observed fine metal particles by the total area of the field of view of the observed image. Note that, "fine metal particles having a specific particle diameter are substantially not contained" means that fine metal particles having the corresponding particle diameter are not observed by the above method.

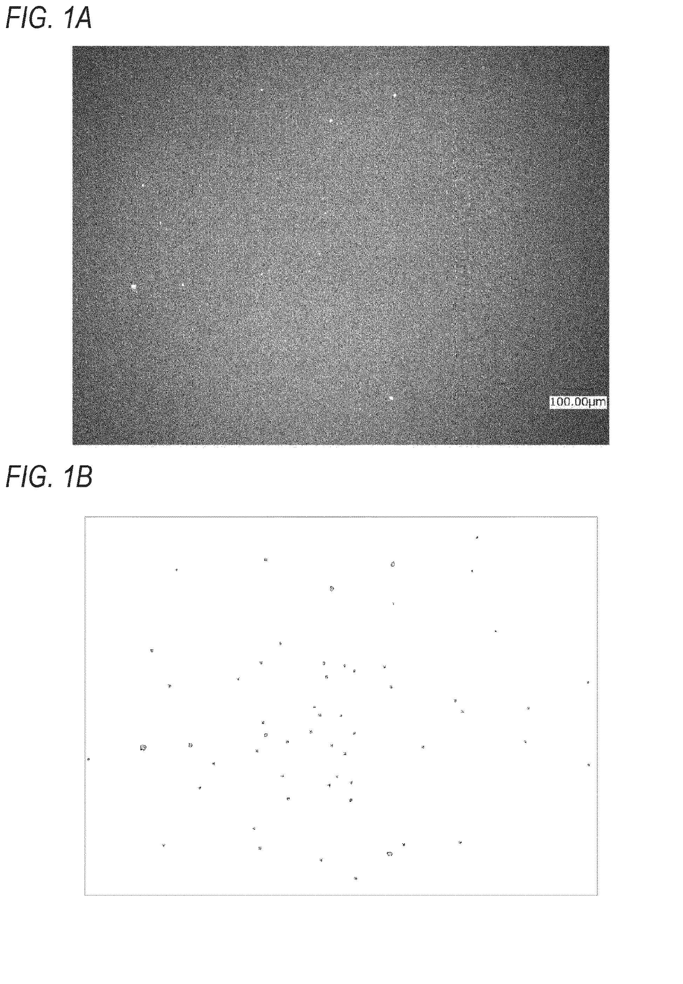

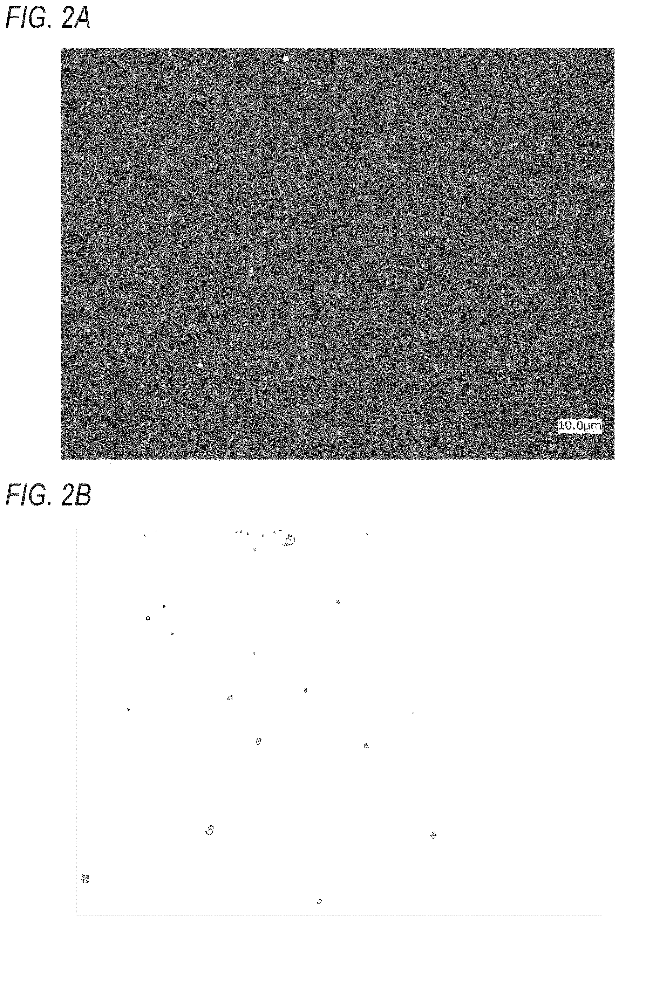

FIG. 1A is a diagram showing an example of an image obtained by capturing the fine metal particle-containing glass according to the present embodiment at a magnification of 200 times by the above method. FIG. 1B is a diagram showing an image obtained by performing image processing on FIG. 1A. FIG. 2A is a diagram showing an example of an image obtained by capturing the fine metal particle-containing glass according to the present embodiment at a magnification of 1,000 times by the above method. FIG. 2B is a diagram showing an image obtained by performing image processing on FIG. 2A.

In the present description, an element concentration (composition) in the fine metal particle-containing glass means an average concentration (average composition) including elements contained in the glass and elements contained in the fine metal particles unless otherwise specified. This can be measured by X-ray fluorescence analysis. In addition, a main component of the fine metal particles can be measured by scanning electron microscope-energy dispersive X-ray spectroscopy (SEM-EDX).

### (Method for Producing Fine Metal Particle-containing Glass)

First, a method for producing a fine metal particle-containing glass according to an embodiment of the present invention (hereinafter, also referred to as the present production method) is described. The fine metal particle-containing glass according to the embodiment of the present invention is obtained by a method including obtaining a melt by melting a glass-containing raw material containing a glass, and subjecting the melt to a reduction treatment. More specifically, this method includes, for example, the following steps (i) to (iii).
Step (i): obtaining a first melt by melting a glass-containing raw material.
Step (ii): precipitating a metal phase by subjecting the first melt to a reduction treatment.
Step (iii): obtaining a second melt by separating at least a part of the metal phase from the first melt.

Here, as to be described in detail later, the glass-containing raw material is a raw material containing, for example, a glass containing an external foreign substance, a glass containing a coloring component or an unnecessary component, or the like. The present inventor has found that in a glass containing an external foreign substance or a glass containing a coloring component or an unnecessary component, when a melt thereof is subjected to a reduction treatment, impurity elements derived from the external foreign substance, the coloring component, or the unnecessary component can be precipitated as a metal phase and separated from the melt. However, according to the study of the present inventors, it has been found that in the case where the precipitated metal phase is separated from the melt, the metal phase in a fine particle state remains in the melt although a certain amount of impurity elements are removed, and the fine metal particles become defects in the glass to be obtained. Therefore, the present inventors have found that by further performing an oxidation treatment on the melt in which the metal phase in a fine particle state remains, the metal phase in a fine particle state is oxidized and contained in the glass in an oxide state (that is, the fine particles can be eliminated).

In particular, the present inventors have found that by setting a particle diameter distribution of the metal phase in a fine particle state within a specific range, it is possible to prevent remaining of the fine particles after the oxidation treatment and a decrease in transparency of the glass to be obtained after the oxidation treatment, and it is easy to obtain a high quality glass. Thus, the present invention has been completed. That is, in the case where the particle diameter distribution in the fine metal particle-containing glass is not appropriate, in particular, in the case where coarse particles are contained or a residual amount of the fine metal particles is large, the fine particles remain in the glass after the oxidation treatment, or the amount of impurity elements contained in the glass increases when the fine metal particles are eliminated, which is likely to cause defects or coloring. In contrast, according to the present invention, defects and coloring after the oxidation treatment can be more reliably reduced, and a high quality glass can be obtained.

### [Step (i)]

In the step (i), a glass-containing raw material is melted to obtain a first melt.

### (Glass-containing Raw Material)

The glass-containing raw material is not particularly limited, and examples thereof include a raw material containing, for example, a glass containing an external foreign substance, a glass containing a coloring component or an unnecessary component, or the like.

Examples of the glass containing an external foreign substance include a mixture containing a glass and a substance other than the glass, a mixture of a plurality of glasses having different main compositions, and a composite in which a substance other than a glass adheres to the glass. Here, the main composition means a composition of a main oxide constituting the glass, and specifically means, for example, a composition of a network former oxide such as SiO₂, Al₂O₃, B₂O₃, and P₂O₅, or a network modifier oxide such as an alkaline earth metal oxide and an alkali metal oxide. The external foreign substance is not particularly limited, and examples thereof include a metal, a ceramic, an organic substance, and a composite material containing an organic substance and an inorganic substance. Representative examples thereof are shown below. Examples of the metal include cast iron, stainless steel, aluminum, copper, silver, silicon, lead, zinc, tin, solder, and a heat wire (mainly containing Ag as a main component) to be applied to an automobile window glass. Examples of the ceramic include concrete, cement, ceramics, a heat-resistant board, a black ceramic print (commonly called black enamel) to be applied to an automobile window glass, and a drying agent such as zeolite to be used in an insulating glass. Examples of the organic substance include a sealing material, an interlayer, paper, wood, a plastic, and a bottle label seal. Examples of the composite material containing an organic substance and an inorganic substance include a base material to be used for a printed circuit board, and a fiber reinforced plastic.

According to the present production method, since an impurity element, which is derived from these external foreign substances, contained in the first melt can be suitably removed, defects of the glass to be obtained after oxidation treatment on the fine metal particle-containing glass can be reduced, and a high quality glass can be obtained. Note that, in the case where the external foreign substance is, for example, an organic substance, an impurity derived therefrom is not necessarily separated as a metal phase in the step (ii). However, as to be described later, according to the present production method, defects derived from the organic substance can also be reduced.

First, most of the organic substance is gasified and removed by burning in the melting process in the step (i). On the other hand, a part thereof remains in the melt as a residual carbon component and acts as a reducing agent for reducing the glass. It is thought that such a residual carbon component, if left as it is, will lead to defects. However, a degree of reduction by the residual carbon component is smaller than that in a reduction treatment step in the subsequent step (ii), and the influence can be completely eliminated by subjecting the fine metal particle-containing glass to an oxidation treatment. Therefore, according to the present production method, defects derived from the organic substance in the glass to be obtained after the oxidation treatment on the fine metal particle-containing glass can also be reduced.

In the case where the glass-containing raw material contains the external foreign substance, a content of the external foreign substance in the glass-containing raw material is, for example, preferably 0.1 ppm by mass or more, more preferably 1 ppm by mass or more, and still more preferably 10 ppm by mass or more, from the viewpoint of suitably obtaining effects of the present invention. On the other hand, the content of the external foreign substance in the glass-containing raw material is preferably 100,000 ppm by mass or less, more preferably 50,000 ppm by mass or less, and still more preferably 30,000 ppm by mass or less, from the viewpoint of improving the quality of the glass to be obtained after the oxidation treatment on the fine metal particle-containing glass. That is, the content of the external foreign substance in the glass-containing raw material is preferably in the range of 0.1 ppm by mass to 100,000 ppm by mass.

Examples of the impurity element derived from the external foreign substance, the coloring component, or the unnecessary component include Fe, Co, Cr, Ni, Sb, Zn, Mn, Sn, Bi, Pb, Ag, Cu, W, and Nb. These elements tend to be reduced more easily than the main component of the glass. According to the present production method, since these impurity elements contained in the first melt can be suitably removed, the coloring of the glass to be obtained can be reduced, and a glass having excellent transparency can be obtained. Hereinafter, the "impurity element" in the present description means at least one element selected from the group consisting of Fe, Co, Cr, Ni, Sb, Zn, Mn, Sn, Bi, Pb, Ag, Cu, W, and Nb. The impurity element is preferably at least one element selected from the group consisting of Fe, Co, Cr, Ni, and Sb.

In the case where the glass-containing raw material contains the impurity element, the content thereof preferably satisfies any one or more of the following (1) to (14) when a composition of the glass-containing raw material is expressed in terms of mass% or ppm by mass based on oxides. In such a case, it can be said that the glass-containing raw material contains an impurity element to some extent, and the effects of the present production method can be suitably obtained. Note that, in the present description, the composition of the glass-containing raw material refers to an average composition of a whole composition including the case where the glass-containing raw material is a mixture or a composite containing an external foreign substance. The composition of the glass-containing raw material can be measured by appropriately selecting the method described in JIS K0050:2019 "General rules for chemical analysis". It is preferable to melt the glass-containing raw material in the atmosphere, and to subject the obtained composition to X-ray fluorescence analysis (XRF), analysis using an electron probe microanalyzer (EPMA), ICP optical emission spectrometry, or ICP mass spectrometry, since the average composition of a whole composition can be relatively easily measured.
(1) Fe₂O₃: 0.001 mass% or more
(2) CoO: 1 ppm by mass or more
(3) Cr₂O₃: 1 ppm by mass or more
(4) NiO: 1 ppm by mass or more
(5) Sb₂O₃: 1 ppm by mass or more
(6) ZnO: 1 ppm by mass or more
(7) MnO: 1 ppm by mass or more
(8) SnO₂: 1 ppm by mass or more
(9) Bi₂O₃: 1 ppm by mass or more
(10) PbO: 1 ppm by mass or more
(11) Ag₂O: 1 ppm by mass or more
(12) CuO: 1 ppm by mass or more
(13) WO₃: 1 ppm by mass or more
(14) Nb₂O₅: 1 ppm by mass or more

In the present production method, while the glass-containing raw material containing a certain amount of the impurity element is suitable, the content of the impurity element is preferably not too large in consideration of the quality of the glass to be obtained after the oxidation treatment on the fine metal particle-containing glass.. From this viewpoint, in the glass-containing raw material, the content of Fe₂O₃ is preferably 5 mass% or less, and more preferably 3 mass% or less. In addition, among the impurity elements, the content of each of the elements other than Fe is preferably 10,000 ppm by mass or less, and more preferably 5,000 ppm by mass or less in terms of ppm by mass based on oxides. For example, as the content of the impurity element in the case where the glass-containing raw material contains the impurity element, it is more preferable to satisfy any one or more of the following (1)' to (14)' in terms of mass% or ppm by mass based on oxides.
(1)' Fe₂O₃: 0.001 mass% to 5 mass%
(2)' CoO: 1 to 10,000 ppm by mass
(3)' Cr₂O₃: 1 to 10,000 ppm by mass
(4)' NiO: 1 to 10,000 ppm by mass
(5)' Sb₂O₃: 1 to 10,000 ppm by mass
(6)' ZnO: 1 to 10,000 ppm by mass
(7)' MnO: 1 to 10,000 ppm by mass
(8)' SnO₂: 1 to 10,000 ppm by mass
(9)' Bi₂O₃: 1 to 10,000 ppm by mass
(10)' PbO: 1 to 10,000 ppm by mass
(11)' Ag₂O: 1 to 10,000 ppm by mass
(12)' CuO: 1 to 10,000 ppm by mass
(13)' WO₃: 1 to 10,000 ppm by mass
(14)' Nb₂O₅: 1 to 10,000 ppm by mass

Specific examples of the glass-containing raw material as exemplified above include a raw material derived from a waste glass product, and a defective glass generated in a production process of a glass product. If necessary, a cullet obtained by subjecting a waste glass product or a defective glass to a treatment such as pulverization may be used as the glass-containing raw material. The kind of the glass product is not particularly limited, and examples thereof include an insulating glass, a laminated glass, a printed glass, a PV panel glass, a glass bottle, a glass wool, a fire-resistant glass, a heat-resistant glass, a glass used for devices such as smartphones, and a glass used for a liquid crystal display and the like. The raw material derived from such a glass product is likely to be a material mixed with an external foreign substance, or to be a material containing a coloring component or an unnecessary component, and is suitable as the glass-containing raw material in the present production method. In addition, it is preferable, from the viewpoint of resource recycling and greenhouse gas reduction, to use a waste glass product or a defective glass as the glass-containing raw material since the glass can be recycled. The glass-containing raw material may contain an additive and a glass raw material other than the waste glass product and the defective glass for the purpose of adjusting the composition of the glass to be obtained or adjusting a viscosity of the melt as described later.

From the viewpoint of efficient recycling, a content of the cullet in the glass-containing raw material is preferably 50 mass% or more, more preferably 60 mass% or more, still more preferably 70 mass% or more, and particularly preferably 80 mass% or more.

### (First Melt)

A viscosity of the first melt is preferably 0.1 dPa·s to 100,000 dPa·s at a temperature in the step (ii), that is, at a temperature during the reduction treatment. That is, the viscosity is preferably 100,000 dPa·s or less, more preferably 10,000 dPa·s or less, and still more preferably 1,000 dPa·s or less. When the viscosity is the above upper limit value or less, the reduction treatment in the step (ii) is easily performed. The lower limit value of the viscosity is not particularly limited, and is preferably 0.1 dPa·s or more from the viewpoint of preventing erosion of a refractory, for example. The viscosity of the first melt can be measured by using a rotating cylinder method, a ball pulling-up method, or the like.

From the above viewpoints, the present production method may further include adjusting the viscosity of the first melt to 0.1 dPa·s to 10,000 dPa·s. A more preferred range of the viscosity is the same as described above.

A method of adjusting the viscosity of the first melt is not particularly limited, and examples thereof include a method of adding a substance capable of adjusting the viscosity to the glass-containing raw material or the first melt. The substance that can be added to the glass-containing raw material or the first melt is not particularly limited, and examples thereof include a carbonate, a hydroxide, an oxide, a fluoride, and a chloride that contain an alkali metal element or an alkaline earth metal element when it is desired to relatively reduce the viscosity, and examples thereof include an oxide containing silicon, aluminum, boron, or phosphorus when it is desired to relatively increase the viscosity.

### [Step (ii)]

In the step (ii), the first melt is subjected to a reduction treatment to precipitate a metal phase.

### (Reduction Treatment)

A reduction treatment method is not particularly limited, and examples thereof include a method in which a reducing agent is used and a method in which the first melt is electrolyzed. From the viewpoint of ease of maintenance of equipment and reduction of power consumption, a method in which a reducing agent is used is preferred.

As the reducing agent in the reduction treatment, for example, at least one selected from the group consisting of a simple substance and a compound that contain at least one element selected from the group consisting of C, Al, Si, Ca, Ti, and H, and a mixture containing the simple substance and the compound can be preferably used from the viewpoint of availability.

Specific examples of the compound corresponding to these include C, Al, Si, Ca, Ti, H₂, CO, a Fe-Si alloy, a Ca-Si alloy, CH₄, NH₃, and a mixture containing these.

From the viewpoint of cost reduction, the reducing agent more preferably contains at least one selected from the group consisting of a simple substance and a compound that contain at least one element selected from the group consisting of C, Si, and H, and a mixture containing the simple substance and the compound, still more preferably contains at least one selected from the group consisting of C, Si, CO, a Fe-Si alloy, H₂, NH₃, and CH₄, and even more preferably contains C, Si, a Fe-Si alloy, H₂, and NH₃.

A state of the reducing agent is not particularly limited, and may be a gas or a solid at room temperature. In the case where the reducing agent is a solid, a shape thereof is not particularly limited, and may be, for example, a granular shape, a powder shape, a lump shape, or a plate shape.

As the reduction treatment method using the reducing agent, specifically, a treatment in which the reducing agent and the first melt are brought into contact with each other may be performed. Examples thereof include a method in which the first melt and the reducing agent are brought into contact with each other by adding a solid reducing agent to the first melt or blowing a gaseous reducing agent into the first melt, and a method in which the glass-containing raw material is melted in a container in which a reducing agent is disposed in advance to bring the obtained first melt into contact with the reducing agent. Note that, the container in which a reducing agent is disposed includes not only a case where the container includes the reducing agent therein but also a case where a part or all of the container itself acts as the reducing agent. In the case of melting the glass-containing raw material in a container in which a reducing agent is disposed in advance, the step (i) and the step (ii) are simultaneously performed.

From the viewpoint of ease of operation, preferred is a method in which the glass-containing raw material is melted in a container in which a reducing agent is disposed in advance.

In the case where the reducing agent is a granular or lumpy solid and the glass-containing raw material is melted in a container in which a reducing agent is disposed in advance, a size of the reducing agent occupying 80% or more of the whole on a mass basis is preferably 0.5 mm to 200 mm. The size of the reducing agent occupying 80% or more of the whole on a mass basis is more preferably 1 mm to 150 mm, and still more preferably 2 mm to 100 mm. Accordingly, the size of voids formed by the reducing agents can be made appropriate, and the entire melt can be efficiently reduced. The size and the ratio of the reducing agent can be evaluated by passing the reducing agent through a sieve having a predetermined opening and measuring the mass with a balance. Note that, a preferred range does not include a minute reducing agent generated by collision between the reducing agents during addition or conveyance or a reaction with the melt.

In the case where the reducing agent is a solid and the glass-containing raw material is melted in a container in which a reducing agent is disposed in advance, it is preferable to fill the container with the reducing agent at a filling rate of 20 vol% to 80 vol% and to bring the reducing agent into contact with the first melt. That is, the filling rate is preferably 20 vol% or more, more preferably 30 vol% or more, and still more preferably 40 vol% or more. On the other hand, the filling rate is preferably 80 vol% or less, more preferably 75 vol% or less, and still more preferably 70 vol% or less. Accordingly, the entire melt can be efficiently reduced. The filling rate of the reducing agent is obtained by calculation based on the mass of the reducing agent when a container having a certain volume is filled with the reducing agent and an apparent density of the reducing agent.

In the case where the reducing agent is a solid, a mass ratio of the reducing agent to the first melt is preferably 0.001 to 100. That is, from the viewpoint of making the effect of the reduction treatment sufficient, the mass ratio is preferably 0.001 or more, more preferably 0.005 or more, and still more preferably 0.01 or more. On the other hand, from the viewpoint of a space-saving treatment, the mass ratio is preferably 100 or less, more preferably 50 or less, and still more preferably 30 or less. The mass ratio of the reducing agent to the first melt is obtained based on an average composition and a charged amount of the melt and an average composition and a charged amount of the reducing agent. In the case of melting the glass-containing raw material in a container in which a reducing agent is disposed in advance, the reduction treatment can be performed as long as the reducing agent is not lost through a reaction with an oxidizing gas such as oxygen contained slightly in a melt or an atmosphere.

The reduction treatment method may be a method in which the first melt is electrolyzed, and this method and a method in which reducing agent is used may be used in combination. In the case of electrolyzing the first melt, for example, electrolysis can be performed by disposing two electrodes in the first melt and applying a voltage therebetween.

A treatment temperature in the reduction treatment is preferably 1,300°C to 1,800°C. That is, the treatment temperature is preferably 1,300°C or higher, more preferably 1,400°C or higher, and still more preferably 1,450°C or higher, from the viewpoint of obtaining a sufficient reduction reaction rate and reducing power. On the other hand, the treatment temperature is preferably 1,800°C or lower, more preferably 1,700°C or lower, and still more preferably 1,650°C or lower, from the viewpoint of preventing the erosion of the refractory and reducing the energy consumption amount.

A time of the reduction treatment is not particularly limited depending on the kind of the reducing agent, the composition of the first melt, and the like, and is preferably, for example, 10 minutes to 48 hours. That is, the treatment time is preferably 10 minutes or longer, more preferably 30 minutes or longer, and still more preferably 60 minutes or longer, from the viewpoint of allowing the reduction reaction to proceed sufficiently. On the other hand, the treatment time is preferably 48 hours or shorter, more preferably 24 hours or shorter, and still more preferably 12 hours or shorter, from the viewpoint of preventing the erosion of the refractory and reducing the energy consumption amount.

In the reduction treatment, it is preferable to selectively precipitate the impurity element in the first melt as a metal phase. Accordingly, a change between a main component of the glass in the glass-containing raw material and a main component of the glass to be obtained is reduced, and the recycling can be suitably performed while the useful component remains. In order to selectively precipitate the impurity element as a metal phase, it is preferable to appropriately adjust conditions such as the kind of the reducing agent and the treatment temperature in the reduction treatment. For example, by setting these to the preferred conditions described above, the impurity element in the first melt tends to be selectively precipitated as a metal phase.

### (Metal Phase)

The metal element contained in the first melt is precipitated in the first melt as a metal phase by being subjected to the reduction treatment. The metal phase contains at least an element contained in the glass-containing raw material or contained in the first melt before the reduction treatment, and preferably contains the above impurity elements. More preferably, as a ratio of the impurity element in the metal phase increases, it can be said that the impurity element is selectively precipitated as the metal phase.

### [Step (iii)]

In the step (iii), at least a part of the metal phase is separated from the first melt subjected to the reduction treatment to obtain a second melt. Here, separating at least a part of the metal phase from the first melt means physically removing at least a part of the metal phase from the first melt, and the second melt means a melt obtained by removing at least a part of the metal phase from the first melt.

The method of separating the metal phase is not particularly limited, and examples thereof: a method in which the metal phase precipitated in the first melt is deposited by becoming coarse to a size sufficient to deposit fine metal particles with bubbling to thereby separate the metal phase; a method in which the metal phase is separated by bonding the metal phase and fine metal particles precipitated by intentionally adding a metal component such as silicon to become coarse metal phase to a size sufficient for deposition; a method by precipitating the metal phase on a surface of a reducing agent and capturing the metal phase on the surface of the reducing agent; and a method in which the metal phase is converted into a highly volatile substance with halogenation or the like to separate the metal phase as a gas. These methods are preferred since it is easy to obtain a fine metal particle-containing glass in which the number density for each particle diameter of the fine metal particles is in the above ranges. From the viewpoint of ease of handling and high separation efficiency, preferred are a method in which the metal phase precipitated in the first melt is deposited by becoming coarse to a size sufficient to deposit fine metal particles with bubbling to thereby separate the metal phase,a method in which the metal phase is separated by bonding the metal phase and fine metal particles precipitated by intentionally adding a metal component such as silicon to become coarse metal phase to a size sufficient for deposition, a method in which the metal phase is separated by precipitating the metal phase on a surface of a reducing agent and capturing the metal phase on the surface of the reducing agent, and more preferred is a method in which the metal phase is separated by precipitating the metal phase on a surface of a reducing agent and capturing the metal phase on the surface of the reducing agent. Note that, as a specific method capable of capturing the metal phase on the surface of the reducing agent by precipitating the metal phase on a surface of a reducing agent, a method of filling a container with the reducing agent in advance and melting the glass-containing raw material in the container to pass the first melt through the reducing agent is exemplified. The step (ii) and the step (iii) may simultaneously be performed.

After the steps (i) to (iii), the fine metal particle-containing glass according to the embodiment of the present invention is obtained from the obtained second melt. The present production method may include a step of cooling the second melt by a known method and a step of forming the second melt.

### (Fine Metal Particle-containing Glass)

The fine metal particle-containing glass according to the embodiment of the present invention is a glass containing fine metal particles, and the number density of the fine metal particles for each particle diameter is in the following ranges. Accordingly, a high quality glass having few defects in production and reduced unnecessary coloring during an oxidation treatment can be obtained.
Particle diameter of more than 1 µm and 5 µm or less: 0 to 1,000 particles/mm²
Particle diameter of more than 5 µm and 10 µm or less: 0 to 30 particles/mm²
Particle diameter of more than 10 µm and 100 µm or less: 0 to 5 particles/mm²
Particle diameter of more than 100 µm and 500 µm or less: 0 to 0.5 particles/mm²
Particle diameter of more than 500 µm: substantially not contained

In the fine metal particle-containing glass, the number density of particles having a particle diameter of more than 1 µm and 5 µm or less is 0 to 1,000 particles/mm². That is, the number density of the particles having a particle diameter of more than 1 µm and 5 µm or less is 1,000 particles/mm² or less, preferably 500 particles/mm² or less, more preferably 400 particles/mm² or less, still more preferably 300 particles/mm² or less, and particularly preferably 200 particles/mm² or less. Accordingly, a visible light transmittance of the glass after the oxidation treatment can be increased, and a high quality glass can be obtained in a short oxidation treatment time. The number density of particles having a particle diameter of more than 1 µm and 5 µm or less is 0 particles/mm² or more, preferably 1 particle/mm² or more, more preferably 5 particles/mm² or more, and still more preferably 10 particles/mm² or more. Accordingly, radiant heat can be efficiently absorbed when melting the fine metal particle-containing glass, and energy consumption can be reduced.

In the fine metal particle-containing glass, the number density of particles having a particle diameter of more than 5 µm and 10 µm or less is 0 to 30 particles/mm². That is, the number density of the particles having a particle diameter of more than 5 µm and 10 µm or less is 30 particles/mm² or less, preferably 20 particles/mm² or less, more preferably 10 particles/mm² or less, and still more preferably 6 particles/mm² or less. Accordingly, the visible light transmittance of the glass after the oxidation treatment can be increased, and a high quality glass can be obtained in a short oxidation treatment time. The number density of the particles having a particle diameter of more than 5 µm and 10 µm or less is 0 particles/mm² or more, preferably 0.05 particles/mm² or more, and more preferably 0.1 particles/mm² or more. Accordingly, the radiant heat can be efficiently absorbed when melting the fine metal particle-containing glass, and the energy consumption can be reduced.

In the fine metal particle-containing glass, the number density of particles having a particle diameter of more than 10 µm and 100 µm or less is 0 to 5 particles/mm². That is, the number density of the particles having a particle diameter of more than 10 µm and 100 µm or less is 5 particles/mm² or less, preferably 3 particles/mm² or less, more preferably 2 particles/mm² or less, still more preferably 1 particle/mm² or less, and particularly preferably 0.5 particles/mm² or less. Accordingly, the visible light transmittance of the glass after the oxidation treatment can be increased, and a high quality glass can be obtained in a short oxidation treatment time. The particles having a particle diameter of more than 10 µm and 100 µm or less may not be contained, and may be 0.1 particles/mm² or more from the viewpoint of efficiently absorbing the radiant heat when melting the fine metal particle-containing glass and reducing the energy consumption.

In the fine metal particle-containing glass, the number density of particles having a particle diameter of more than 100 µm and 500 µm or less is 0 to 0.5 particles/mm². That is, the number density of the particles having a particle diameter of more than 100 µm and 500 µm or less is 0.5 particles/mm² or less, preferably 0.3 particles/mm² or less, more preferably 0.2 particles/mm² or less, and still more preferably 0.1 particles/mm² or less. Accordingly, the visible light transmittance of the glass after the oxidation treatment can be increased, and a high quality glass can be obtained in a short oxidation treatment time. The particles having a particle diameter of more than 10 µm and 100 µm or less may not be contained, and may be 0.01 particles/mm² or more from the viewpoint of efficiently absorbing the radiant heat when melting the fine metal particle-containing glass and reducing the energy consumption.

Particles having a particle diameter of more than 500 µm are substantially not contained, but in the case of being contained, they can be removed by a metal detector, an optical sorter, or the like in the subsequent process.

In the fine metal particle-containing glass, the area ratio of the fine metal particles in any cross section of the glass is 0% to 0.15% with respect to the total area of the any cross section. The area ratio is preferably 0.13% or less, and more preferably 0.10% or less. Accordingly, unnecessary coloring can be reduced when the oxidation treatment is performed. The area ratio is 0% or more, preferably 0.001% or more, more preferably 0.002% or more, and still more preferably 0.003% or more. Accordingly, the radiant heat is efficiently absorbed when melting the fine metal particle-containing glass, and the energy consumption can be reduced. The area ratio is obtained by observing any cross section of the fine metal particle-containing glass using an optical microscope and performing image analysis by the above method, and dividing the total area of the observed fine metal particles by the total area of the field of view of the observed image.

A shape of the fine metal particles may be, for example, a substantially spherical shape or a substantially perfect spherical shape.

In the fine metal particle-containing glass, an absolute value ABS (Tv-T₁₁₀₀) of a difference between a visible light transmittance Tv at a thickness of 2 mm and a transmittance T₁₁₀₀ at a wavelength of 1100 nm at a thickness of 2 mm is preferably 30% or less. In the fine metal particle-containing glass, since the impurity element is precipitated as a metal phase, the content of the impurity element remaining in the glass phase is relatively small. In this case, absorption derived from the impurity element such as a coloring element decreases. The transmittance T₁₁₀₀ at a wavelength of 1100 nm is influenced by a magnitude of light absorption derived from Fe²⁺. That is, a relatively small ABS (Tv-T₁₁₀₀) is preferred, which means that Fe is sufficiently precipitated as a metal phase in the fine metal particle-containing glass in the case where the glass-containing raw material contains Fe as an impurity element. The ABS (Tv-T₁₁₀₀) is more preferably 20% or less, and still more preferably 10% or less. Since a smaller ABS (Tv-T₁₁₀₀) is preferred, the lower limit thereof is not particularly limited.

Note that, in the present description, the visible light transmittance Tv refers to a value of the visible light transmittance Tv at a thickness of 2 mm measured based on JIS R3106:2019. A glass thicker than 2 mm can be subjected to the measurement by being polished to 2 mm by using a general method. A glass having a thickness of less than 2 mm can be subjected to the measurement by re-melting the glass in an inert gas in a general electric furnace so as not to oxidize the fine metal particles to obtain a glass having a thickness of 2 mm or more, and then polishing the glass to 2 mm. The T₁₁₀₀ means a transmittance at a wavelength of 1100 nm at a thickness of 2 mm.

In the fine metal particle-containing glass, the fine metal particles preferably contain at least one element selected from the group consisting of Fe, Si, Co, Cr, Ni, Ti, P, Sb, W, and Nb. In the case where the fine metal particle-containing glass is obtained by the method described above, the fine metal particles contain at least a part of elements contained in the glass-containing raw material or the first melt before the reduction treatment. It can be said that the above elements are elements that are easily contained in the fine metal particles due to the elements contained in the glass-containing raw material or the first melt before the reduction treatment.

An average concentration of Fe₂O₃ in the fine metal particle-containing glass is preferably 0.001% to 0.5% in terms of mass% based on oxides. Accordingly, it can be determined that the content of the impurity element, particularly the content of the Fe element, is relatively small in the fine metal particle-containing glass. The concentration of Fe₂O₃ is preferably 0.5% or less, more preferably 0.4% or less, and still more preferably 0.3% or less. On the other hand, the concentration of Fe₂O₃ is preferably as small as possible. The lower limit is not particularly limited, and may be, for example, 0.001% or more.

The composition (average composition) of the fine metal particle-containing glass is not particularly limited, and may be, for example, a glass selected from the group consisting of a soda lime glass, an aluminosilicate glass, an alkali-free glass, and an alkali borosilicate glass. A soda lime glass is preferred from the viewpoint of the largest production amount in the world and large contribution to the resource recycling and the greenhouse gas reduction. Note that, the composition of the glass in the glass-containing raw material used for producing the fine metal particle-containing glass is not particularly limited, and may be the same as the composition of the fine metal particle-containing glass except for the content of the impurity element.

In the case where the fine metal particle-containing glass is a soda lime glass, the composition thereof preferably contains 50% to 85% in total of SiO₂ and Al₂O₃, 5% to 30% in total of alkaline earth metal oxides (RO), and 0.1% to 25% in total of alkali metal oxides (R₂O), in terms of mass% based on oxides. More preferably, it contains 60% to 80% of SiO₂, 5% to 20% of Na₂O, 0% to 15% of MgO, 5% to 20% of CaO, and 0% to 10% of Al₂O₃. In addition, K₂O may be contained in an amount of less than 5%.

Hereinafter, an example of a preferred composition in the case where the fine metal particle-containing glass is a soda lime glass is described more specifically. Note that, in the case where the glass composition is described as % or ppm, it means mass% based on oxides or ppm by mass based on oxides unless otherwise specified.

The total content of SiO₂ and Al₂O₃ is preferably 50% to 85%. The total content of SiO₂ and Al₂O₃ is preferably 50% or more since the glass can be stably present and weather resistance is improved. The total content of SiO₂ and Al₂O₃ is more preferably 55% or more, and still more preferably 60% or more. The total content of SiO₂ and Al₂O₃ is preferably 85% or less since the reduction reaction rate and an oxidation reaction rate are increased. The total content of SiO₂ and Al₂O₃ is more preferably 80% or less, and still more preferably 78% or less.

SiO₂ is a main component of the soda lime glass.

The content of SiO₂ is preferably 50% to 80%. The content of SiO₂ is preferably 50% or more since the weather resistance is improved. The content of SiO₂ is more preferably 60% or more, and still more preferably 65% or more. The content of SiO₂ is preferably 80% or less since devitrification is less likely to occur. The content of SiO₂ is more preferably 75% or less, and still more preferably 73% or less.

Al₂O₃ is a component that improves the weather resistance.

The content of Al₂O₃ is preferably 0% to 20%. When Al₂O₃ is contained, the weather resistance is improved. The content of Al₂O₃ is preferably 0% or more, more preferably 0.1% or more, still more preferably 0.5% or more, and particularly preferably 1% or more. The content of Al₂O₃ is more preferably 15% or less, and still more preferably 10% or less.

The total content of the alkaline earth metal oxides (RO) is preferably 5% to 30%. The total content of the alkaline earth metal oxides (RO) is preferably 5% or more since meltability is improved. The total content of the alkaline earth metal oxides (RO) is more preferably 7% or more, and still more preferably 10% or more. The total content of the alkaline earth metal oxides (RO) is preferably 30% or less since the devitrification is less likely to occur. The total content of the alkaline earth metal oxides (RO) is more preferably 25% or less, and still more preferably 20% or less. Here, the total content of the alkaline earth metal oxides (RO) means the total content of MgO, CaO, SrO, and BaO.

MgO is a component that promotes the melting of a glass raw materials and that improves the weather resistance.

The content of MgO is preferably 0% to 15%. When MgO is contained, the meltability and the weather resistance are improved. The content of MgO is preferably 0% or more, more preferably 1% or more, still more preferably 2% or more, and particularly preferably 4% or more. The content of MgO is preferably 15% or less since the devitrification is less likely to occur. The content of MgO is more preferably 10% or less, and still more preferably 5% or less.

CaO is a component that promotes the melting of the glass raw materials and that improves the weather resistance.

The content of CaO is preferably 5% to 20%. The content of CaO is preferably 5% or more since the meltability and the weather resistance are improved. The content of CaO is more preferably 6% or more, and still more preferably 7% or more. The content of CaO is preferably 20% or less since the devitrification is less likely to occur. The content of CaO is more preferably 15% or less, and still more preferably 12% or less.

The total content of the alkali metal oxides (R₂O) is preferably 0.1% to 25%. The total content of the alkali metal oxides (R₂O) is preferably 0.1% or more since the meltability is improved. The total content of the alkali metal oxides (R₂O) is more preferably 1% or more, still more preferably 3% or more, and particularly preferably 5% or more. The total content of the alkali metal oxides (R₂O) is preferably 25% or less since the weather resistance is improved. The total content of the alkali metal oxides (R₂O) is more preferably 20% or less, and still more preferably 15% or less. Here, the total content of the alkali metal oxides (R₂O) means the total content of Li₂O, Na₂O, and K₂O.

Na₂O is a component that promotes the melting of the glass raw material.

The content of Na₂O is preferably 0.1% to 25%. The content of Na₂O is preferably 0.1% or more since the meltability is improved. The content of Na₂O is more preferably 1% or more, still more preferably 3% or more, and particularly preferably 5% or more. The content of Na₂O is preferably 25% or less since the weather resistance is improved. The content of Na₂O is more preferably 20% or less, and still more preferably 15% or less.

K₂O is a component that promotes the melting of the glass raw material.

K₂O is not essential, but may be contained in an amount of less than 5%. That is, the content of K₂O may be 0% or more and less than 5%. When K₂O is contained, the meltability is improved. In the case where K₂O is contained, the content thereof is preferably 0.01% or more, and more preferably 0.5% or more. The content of K₂O is preferably less than 5% since the weather resistance is improved. The content of K₂O is more preferably 3% or less, and still more preferably 2% or less.

The composition (average composition) of the glass obtained by the present production method can be measured by performing composition analysis using X-ray fluorescence analysis. In addition, components having a content of less than 1% and light element components such as Li₂O and B₂O₃ may be difficult to be quantified by X-ray fluorescence analysis, and the composition analysis may be performed by using an electron probe microanalyzer (EPMA), ICP optical emission spectrometry, or ICP mass spectrometry.

A shape of the fine metal particle-containing glass is not particularly limited, and may be various shapes such as a block shape, a crushed piece shape, a container shape, a fiber shape, a bead shape, and a plate shape. In the case where the glass has a plate shape, the glass may have a flat plate shape or may be formed or bent to have a curved surface. In the case where the glass has a plate shape, a thickness is not particularly limited, and is preferably, for example, 0.1 mm to 20 mm. In the case where the fine metal particle-containing glass is used as a glass raw material, from the viewpoint of ease of handling, a shape occupying 80% or more on a mass basis in the fine metal particle-containing glass is preferably a crushed piece shape or a spherical shape having a size of 1 mm to 100 mm, and more preferably a crushed piece shape or a spherical shape having a size of 3 mm to 50 mm. The glass having a crushed piece shape is one crushed by a general mechanical crushing method such as water crushing using water or a roll crusher, and is generally called a cullet. The glass having a spherical shape can be prepared by using wind power such as a gas atomization method. The size and the ratio of the glass can be evaluated by passing the glass through a sieve having a predetermined opening and measuring the mass with a balance. Note that, a minute glass generated by collision or the like between glasses during conveyance is not included.

### (Oxidation Treatment)

When the above fine metal particle-containing glass is subjected to an oxidation treatment, a high quality glass having few defects in production and reduced unnecessary coloring can be obtained.

That is, a glass is preferably obtained by subjecting a melt (hereinafter, also referred to as a third melt) obtained by melting the fine metal particle-containing glass to an oxidation treatment.

An oxidation treatment method is not particularly limited, and examples thereof include a method of using an oxidizing gas and a method of adding an oxidizing agent. The method using an oxidizing gas is preferred from the viewpoint that a composition of the melt is less likely to change.

Specific examples of the oxidizing gas include a gas containing O₂, a gas containing H₂O, and a gas containing CO₂. From the viewpoint of oxidation efficiency and the availability, a gas containing O₂ is preferred as the oxidizing gas. Examples of the gas containing O₂ include air (the atmosphere), an O₂ gas, and a mixed gas of an O₂ gas and an inert gas, and air (the atmosphere) and an O₂ gas are preferred from the viewpoint of the availability.

Specific examples of the method of performing the oxidation treatment using an oxidizing gas include a method of bubbling the third melt using the oxidizing gas. If necessary, an inert gas may be mixed with the oxidizing gas. Examples of the inert gas include a nitrogen gas, an argon gas, and a helium gas.

Specific examples of the oxidizing agent include nitrates such as sodium nitrate, sulfates such as sodium sulfate, cerium oxide, antimony (V) oxide, and tin (IV) oxide. From the viewpoint of the oxidation efficiency, the availability, and an environmental impact, nitrates, cerium oxide, and tin (IV) oxide are preferred.

Specific examples of the method of performing the oxidation treatment using an oxidizing agent include a method of adding an oxidizing agent to the third melt. The oxidizing agent is preferably in a powder form for an efficient reaction. The addition method is preferably a powder injection method for an efficient reaction.

A treatment temperature in the oxidation treatment is preferably 1,300°C to 1,800°C. That is, the treatment temperature is preferably 1,300°C or higher, more preferably 1,400°C or higher, and still more preferably 1,450°C or higher, from the viewpoint of obtaining a sufficient oxidation reaction rate. On the other hand, the treatment temperature is preferably 1,800°C or lower, more preferably 1,700°C or lower, and still more preferably 1,650°C or lower, from the viewpoint of preventing the erosion of the refractory and reducing the energy consumption amount.

An oxidation treatment time is not particularly limited, and in the case of bubbling using an oxidizing gas, for example, 1 minute to 24 hours is preferred. That is, the treatment time is preferably 1 minute or longer, more preferably 5 minutes or longer, and still more preferably 15 minutes or longer, from the viewpoint of sufficiently eliminating the fine metal particles. On the other hand, the treatment time is preferably 24 hours or shorter, more preferably 12 hours or shorter, and still more preferably 8 hours or shorter, from the viewpoint of preventing the erosion of the refractory and reducing the energy consumption amount.

With the oxidation treatment, a high quality glass can be produced from the fine metal particle-containing glass. Note that, after the oxidation treatment, a known glass composition adjustment step, forming step, annealing step, or the like may be performed.

### (Glass)

When a melt obtained by melting the fine metal particle-containing glass is subjected to an oxidation treatment by bubbling using the atmosphere at 1,500°C for 30 minutes to obtain a glass, the obtained glass preferably does substantially not contain fine metal particles having a particle diameter of 1 µm or more. Here, "substantially not contain fine metal particles having a particle diameter of 1 µm or more" means that fine metal particles having a particle diameter of 1 µm or more are not observed when any cross section of the fine metal particle-containing glass is observed using an optical microscope and subjected to image analysis by the above method.

When a melt obtained by melting the fine metal particle-containing glass is subjected to an oxidation treatment by bubbling using the atmosphere at 1,500°C for 120 minutes to obtain a glass, the obtained glass preferably has a visible light transmittance Tv of 50% or more. Since a particle diameter distribution of the fine metal particles contained in the fine metal particle-containing glass according to the embodiment of the present invention is within a specific range, coloring and defects of the glass after the oxidation treatment can be reduced, and a glass having a relatively large visible light transmittance Tv can be obtained. That is the Tv is preferably 50% or more, more preferably 70% or more, still more preferably 80% or more, and particularly preferably 87.5% or more. The Tv is preferably as large as possible, and may be, for example, 92% or less. That is, the Tv is preferably in the range of 50% to 92%. As described above, the visible light transmittance Tv refers to a value of the visible light transmittance Tv at a thickness of 2 mm measured based on JIS R3106:2019.

A difference ΔTv between the visible light transmittance Tv of the main glass contained in the glass-containing raw material used in the production of the fine metal particle-containing glass and the visible light transmittance Tv of the obtained glass when the glass is obtained by subjecting a melt obtained by melting the fine metal particle-containing glass to an oxidation treatment by bubbling using the atmosphere at 1,500°C for 120 minutes is preferably 0% to 70%. In the case where the glass in the glass-containing raw material contains a coloring component, the visible light transmittance Tv thereof tends to decrease. Since the glass obtained by subjecting the fine metal particle-containing glass to an oxidation treatment has relatively high transparency because the impurity elements including the coloring component and the like are removed, the ΔTv tends to increase. That is, the ΔTv is preferably 0% or more, more preferably 1.0% or more, and still more preferably 2.0% or more. The ΔTv is preferably as large as possible, and may be, for example, 70% or less. Note that, the main glass contained in the glass-containing raw material refers to a glass excluding the external foreign substance contained in the glass-containing raw material. In addition, the ΔTv means (the visible light transmittance Tv of the glass obtained after the oxidation treatment) - (the visible light transmittance Tv of the main glass contained in the glass-containing raw material).

When a melt obtained by melting the fine metal particle-containing glass is subjected to an oxidation treatment by bubbling using the atmosphere at 1,500°C for 120 minutes to obtain a glass, the followings are preferably satisfied.

That is, a ratio NWF_{after/before} of a total content of a network former oxide in the obtained glass to a total content of the network former oxide in the fine metal particle-containing glass is preferably 0.40 to 1.50 in terms of mass% based on oxides. That is, the NWF_{after/before} is preferably 0.40 or more, more preferably 0.50 or more, and still more preferably 0.60 or more. On the other hand, the NWF_{after/before} is preferably 1.50 or less, more preferably 1.30 or less, and still more preferably 1.20 or less. In addition, a ratio NWM_{after/before} of a total content of a network modifier oxide in the obtained glass to a total content of the network modifier oxide in the fine metal particle-containing glass is preferably 0.60 to 2.00. That is, the NWM_{after/before} is preferably 0.60 or more, more preferably 0.70 or more, and still more preferably 0.80 or more. On the other hand, the NWM_{after/before} is preferably 2.00 or less, more preferably 1.60 or less, and still more preferably 1.40 or less.

Both the network former oxide and the network modifier oxide constitute a main component of the glass. Therefore, the NWF_{after/before} and the NWM_{after/before} respectively falling within the above ranges means that a change between the main component of the glass in the fine metal particle-containing glass and the main component of the glass obtained after oxidation treatment is small. This is preferred from the viewpoint that recycling can be performed as a glass raw material while maintaining useful components.

In the present description, the total content of the network former oxide means the total content of SiO₂, Al₂O₃, B₂O₃, and P₂O₅. The total content of the network modifier oxide means the total content of MgO, CaO, SrO, BaO, Li₂ O, Na₂O, and K₂O.

### (Application)

According to the present invention, it is possible to provide a fine metal particle-containing glass from which a high quality glass having few defects in production and reduced coloring during an oxidation treatment can be obtained. That is, the fine metal particle-containing glass according to the embodiment of the present invention is suitably used as a glass raw material for producing a high quality glass having few defects in production and reduced coloring. In addition, since the fine metal particle-containing glass according to the embodiment of the present invention is preferably derived from a glass-containing raw material including a waste glass or a defective glass, the waste glass or the defective glass can be suitably recycled by producing a glass using the fine metal particle-containing glass as a raw material. A glass obtained by subjecting the fine metal particle-containing glass to an oxidation treatment can be used in various applications, and is preferably used as, for example, a glass for building materials, a glass for automobiles, a container glass, glass wool, a glass bead, and the like.

### EXAMPLES

Hereinafter, the present invention is described in detail with reference to Examples, but the present invention is not limited thereto. Examples 1 to 8 and 12 to 19 are Working Examples, and Examples 9 to 11 are Comparative Examples.

### (Glass-containing Raw Material)

Glasses A to L having compositions in mass% or ppm by mass base on oxides shown in Table 1 were prepared. Stainless steel (SUS304) and metallic aluminum (Al) were prepared as external foreign substances. The glasses A to L and the external foreign substances were used in the combinations shown in Tables 2 and 3 to prepare glass-containing raw materials in Examples 1 to 19. In the case where the kind of the external foreign substance is described as "no", it means that each of the glasses A to L is used as it is as the glass-containing raw material.

### (Example 1)

The glass A as a glass-containing raw material was charged into an alumina crucible and melted by raising the temperature to 1,500°C in an electric furnace under a nitrogen atmosphere to obtain a first melt. Using lumpy carbon (C) having a size shown in Table 2 as a reducing agent, a reduction treatment was performed by passing the first melt through the reducing agent disposed in advance in the alumina crucible so as to have a mass ratio of 0.4 and a filling rate of about 60 vol%, thereby precipitating a metal phase. In the reduction treatment, the treatment temperature was 1,500°C, and the treatment time was 120 minutes. With this treatment, the metal phase was precipitated on the surface of the reducing agent, and the metal phase was captured on the surface of the reducing agent. At the same time, the mixture was left to stand to deposit relatively large fine metal particles. Thereafter, the crucible was annealed, and in order to separate the deposited fine metal particles, a bottom surface thereof was physically cut by 3 mm to 5 mm to separate at least a part of the metal phase, thereby obtaining a fine metal particle-containing glass in Example 1 as a cooled substance of a second melt.

Thereafter, the fine metal particle-containing glass was charged into the alumina crucible and melted by raising the temperature to 1,500°C in an electric furnace to obtain a third melt. The oxidation treatment was performed by blowing air into the third melt. At this time, the third melt was subjected to an oxidation treatment under two different conditions to obtain two kinds of glasses after the oxidation treatment. That is, as an oxidation treatment (a), an oxidation treatment was performed at a treatment temperature of 1,500°C for a treatment time of 30 minutes, and then the third melt was annealed to obtain a glass (a) after the oxidation treatment. In addition, as an oxidation treatment (b), an oxidation treatment was performed at a treatment temperature of 1,500°C for a treatment time of 120 minutes, and then the third melt was annealed to obtain a glass (b) after the oxidation treatment.

### (Examples 2, 5 to 8, and 12 to 19)

A fine metal particle-containing glass in each example was obtained in the same manner as in Example 1 except that the conditions were changed as shown in Tables 2 and 3. Thereafter, the fine metal particle-containing glass in each example was melted in the same manner as in Example 1, and the third melt was subjected to two kinds of oxidation treatments to obtain a glass (a) and a glass (b) after the oxidation treatment.

### (Example 3)

The glass A was used as a glass-containing raw material, carbon (C) was mixed as a reducing agent at a mass ratio of 0.03 with respect to the mass of the glass A, the mixture was charged into an alumina crucible, the temperature was raised to 1,500°C in an electric furnace under a nitrogen atmosphere, then a N₂ gas was bubbled from the upper portion using an alumina pipe to obtain a first melt, and a reduction treatment was performed simultaneously to precipitate a metal phase. The treatment time in the reduction treatment was 120 minutes. Thereafter, the mixture was left to stand for 120 minutes to deposit relatively large fine metal particles. Thereafter, the crucible was annealed, and in order to separate the deposited fine metal particles, a bottom surface thereof was physically cut by 3 mm to 5 mm to separate at least a part of the metal phase, thereby obtaining a fine metal particle-containing glass in Example 3 as a cooled substance of a second melt. Thereafter, the fine metal particle-containing glass in Example 3 was melted in the same manner as in Example 1, and the third melt was subjected to two kinds of oxidation treatments to obtain a glass (a) and a glass (b) after the oxidation treatment.

### (Example 4)

A fine metal particle-containing glass in Example 4 was obtained in the same manner as in Example 3 except that the glass A was used as the glass-containing raw material, carbon (C) and silicon (Si) were mixed as the reducing agent at a mass ratio of 0.02 and 0.01, respectively, with respect to the mass of the glass A, and the conditions were changed as shown in Table 2. Thereafter, the fine metal particle-containing glass in Example 4 was subjected to an oxidation treatment to obtain a glass after the oxidation treatment. Thereafter, the fine metal particle-containing glass in Example 4 was melted in the same manner as in Example 1, and the third melt was subjected to two kinds of oxidation treatments to obtain a glass (a) and a glass (b) after the oxidation treatment.

### (Examples 9 to 11)

A glass-containing raw material containing a glass having a crushed piece shape prepared through a sieve having an opening of 5.6 mm as shown in Table 2 and activated carbon having a size of 74 µm or less as a reducing agent were mixed at a mass ratio of 0.03 with respect to the mass of the glass, the mixture was charged into an alumina crucible, the temperature was raised to 1,500°C in an electric furnace under a nitrogen atmosphere to obtain a first melt, and a reduction treatment was performed to precipitate a metal phase. Thereafter, the mixture was left to stand for 120 minutes, the crucible was annealed, and in order to separate the precipitated fine metal particles, a bottom surface thereof was physically cut by 3 mm to 5 mm to separate at least a part of the metal phase, thereby obtaining a fine metal particle-containing glass in each of Examples 9 to 11 as a cooled substance of a second melt. Thereafter, the fine metal particle-containing glass in each of Examples 9 to 11 was melted in the same manner as in Example 1, and the third melt was subjected to two kinds of oxidation treatments to obtain a glass (a) and a glass (b) after the oxidation treatment.

### (Evaluation)

The obtained fine metal particle-containing glass in Examples 1 to 19 and the glasses after the oxidation treatment obtained by subjecting these glasses to an oxidation treatment were evaluated by the following methods. The results are shown in Tables 2 and 3.

### (Number Density and Area Ratio of Fine Metal Particles)

Observation was performed by epi-illumination using a digital microscope (model number VHX-5000, manufactured by KEYENCE Corporation). After polishing any cross section, images were taken at 16 positions at magnifications of 200 times and 1,000 times, respectively, and image analysis was performed using image analysis software ImageJ. First, the image was converted into 8 bits, then a threshold value serving as a boundary between a particle and a glass was set using a threshold function while checking the image. Thereafter, the area of each particle included in the image was calculated using the Analyze Particle function, and the particle diameter distribution of each image was obtained. The number density for each particle diameter of the fine metal particles was obtained by dividing the number of the observed specific particle diameter by a total area of the field of view of the observed image. In addition, the area ratio of the fine metal particles was obtained by dividing the total area of the observed fine metal particles by the total area of the field of view of the observed image. From the viewpoint of measurement accuracy, only particles having a particle diameter of more than 5 µm were counted at a magnification of 200 times, and only particles having a particle diameter of more than 1 µm to 5 µm were counted at a magnification of 1,000 times. The observation and the analysis were performed on the fine metal particle-containing glass and the glass (a) after the oxidation treatment in each example. In the case where the glass (a) after the oxidation treatment did substantially not contain fine metal particles having a particle diameter of 1 µm or more, "presence or absence of fine metal particles in glass after performing oxidation treatment (a)" in Tables 2 and 3 was recorded as "no".

As an example of the captured image and the image after the image processing, FIG. 1A shows an image obtained by capturing any cross section of the fine metal particle-containing glass in Example 4 at a magnification of 200 times. FIG. 1B shows an image obtained by performing image processing on FIG. 1A. FIG. 2A shows an image of any cross section of the fine metal particle-containing glass in Example 4 captured at a magnification of 1,000 times. FIG. 2B shows an image obtained by performing image processing on FIG. 2A.

### (Main Component of Fine Metal Particles)

The main component of the fine metal particles was measured by scanning electron microscope-energy dispersive X-ray spectroscopy (SEM-EDX).

### (Tv, ABS (Tv-T₁₁₀₀), and ΔTv)

The visible light transmittance Tv was measured using a spectrophotometer (Model No. UH4100, manufactured by Hitachi High-Tech Science Corporation) based on JIS R3106:2019. In addition, the transmittance T₁₁₀₀ at a wavelength of 1100 nm was measured. The measurement was performed on the glasses A to L, the fine metal particle-containing glass in each example, and the glass (b) obtained by performing the oxidation treatment in each example, and a sample having a thickness of 2 mm was used for the measurement.

### (Composition and Concentration of Fe₂O₃)

For the fine metal particle-containing glass and the glass (b) obtained by performing the oxidation treatment in each example, and the glasses A to L, the composition and the concentration of the impurity element in terms of mass% or ppm by mass were measured as follows. The concentrations of main components (SiO₂, Al₂O₃, P₂O₅, RO, and R₂O in Examples) and Fe₂O₃ in the glass were measured by X-ray fluorescence analysis. However, in the reduction treatment or the oxidation treatment, in the case where an alumina crucible or an alumina pipe was used, Al₂O₃ may be unintentionally dissolved in the glass to increase the concentration of Al₂O₃, and thus the concentration of Al₂O₃ in the glass after the treatment was calculated using the same value as the concentration of Al₂O₃ contained in the glass-containing raw material. Note that, in the scope of the present invention, it is found that there is no factor that affects the concentration of Al₂O₃ in the glass except for the factor that the alumina crucible or the alumina pipe is dissolved in the glass. Note that, the concentrations of other trace components contained in the glasses A to L were measured by laser ablation-ICP mass spectrometry (LA-ICP-MS) (laser system: model number NWR213, manufactured by Japan Laser Corporation; ICP mass spectrometer: model number ELEMENT II, manufactured by Thermo Fisher Scientific K.K.).

**[Table 1]**

| | Unit | Glass A | Glass B | Glass C | Glass D | Glass E | Glass F |
|---|---|---|---|---|---|---|---|
| SiO₂+Al₂O₃ | wt% | 72 | 74 | 72 | 74 | 73 | 74 |
| Total value of RO | wt% | 13 | 12 | 13 | 12 | 13 | 13 |
| Total value of R₂O | wt% | 14 | 13 | 14 | 13 | 12 | 12 |
| P₂O₅ | wt% | - | - | - | - | - | - |
| Fe₂O₃ | wt% | 1.5 | 0.5 | 1.0 | 0.5 | 1.8 | 0.23 |
| CoO | ppm by wt | - | - | 230 | - | 100 | 140 |
| Cr₂O₃ | ppm by wt | - | - | 12 | - | 190 | - |
| NiO | ppm by wt | - | - | - | - | - | 880 |
| MnO₂ | ppm by wt | - | - | - | - | - | - |
| Sb₂O₃ | ppm by wt | - | - | - | 1600 | - | - |
| ZnO | ppm by wt | - | - | - | - | - | - |
| PbO | ppm by wt | - | - | - | - | - | - |
| CuO | ppm by wt | - | - | - | - | - | - |
| Visible light transmittance Tv at thickness of 2 mm | % | 77.3 | 86.4 | 40.5 | 87.1 | 56.4 | 51.6 |

**[Table 1] (continued)**

| | Unit | Glass G | Glass H | Glass I | Glass J | Glass K | Glass L |
|---|---|---|---|---|---|---|---|
| SiO₂+Al₂O₃ | wt% | 73 | 76 | 76 | 82 | 84 | 83 |
| Total value of RO | wt% | 13 | 12 | 11 | 4 | 2 | - |
| Total value of R₂O | wt% | 14 | 12 | 12 | 13 | 11 | 10 |
| P₂O₅ | wt% | - | - | - | - | - | 5 |
| Fe₂O₃ | wt% | 0.01 | 0.5 | 0.1 | 0.6 | 0.6 | 0.6 |
| CoO | ppm by wt | - | - | 200 | - | - | - |
| Cr₂O₃ | ppm by wt | - | 900 | 1100 | - | - | - |
| NiO | ppm by wt | - | - | - | - | - | - |
| MnO₂ | ppm by wt | - | - | 400 | - | - | - |
| Sb₂O₃ | ppm by wt | 1300 | - | - | - | - | - |
| ZnO | ppm by wt | - | 100 | - | - | - | - |
| PbO | ppm by wt | - | 200 | - | - | - | - |
| CuO | ppm by wt | - | - | 200 | - | - | - |
| Visible light transmittance Tv at thickness of 2 mm | % | 91.7 | 44.9 | 50.2 | 85.8 | 83.7 | 81.8 |

**[Table 2]**

| | | Unit | Example 1 | Example 2 | Example 3 | Example 4 |
|---|---|---|---|---|---|---|
| **Glass-containing raw material** | | | | | | |
| Kind of glass | | - | A | B | A | A |
| Kind of external foreign substance | | - | No | No | No | No |
| Amount of external foreign substance | | ppm by wt | | | | |
| Reduction treatment temperature | | °C | 1500 | 1500 | 1500 | 1500 |
| Kind of reducing agent | | - | C | C | C | C, Si |
| Size of reducing agent | | mm | 3 to 10 | 3 to 10 | < 0.074 | < 0.074 |

| **Fine metal particle-containing glass** | | | | | | |
|---|---|---|---|---|---|---|
| Main component of fine metal particles | | - | Fe-Si | Fe-Si | Fe-Si | Fe-Si |
| | More than 1 µm and 5 µm or less | Particles/mm² | 69.7 | 20.8 | 38.8 | 35.9 |
| Number density of fine metal particles | More than 5 µm and 10 µm or less | Particles/mm² | 0.1 | 0.3 | 14.9 | 7.0 |
| | More than 10 µm and 100 µm or less | Particles/mm² | 0.0 | 0.0 | 1.0 | 1.2 |
| | More than 100 µm and 500 µm or less | Particles/mm² | 0.0 | 0.0 | 0.0 | 0.0 |
| | More than 500 µm | Particles/mm² | 0.0 | 0.0 | 0.0 | 0.0 |
| Area ratio of fine metal particles | | % | 0.012 | 0.003 | 0.072 | 0.083 |
| ABS (Tv-T₁₁₀₀) | | % | 2.2 | 0.2 | 10.4 | 6.3 |
| Fe₂O₃ (Ave.) | | wt% | 0.12 | 0.07 | 0.19 | 0.19 |

| **Glass after oxidation treatment** | | | | | | |
|---|---|---|---|---|---|---|
| NWF after | | wt% | 75.9 | 75.6 | 75.9 | 77.5 |
| NWF after/before | | - | 1.05 | 1.02 | 1.05 | 1.08 |
| NWM after | | wt% | 23.7 | 24.2 | 23.9 | 22.4 |
| NWM after/before | | - | 0.88 | 0.97 | 0.89 | 0.83 |
| Presence or absence of fine metal particles in glass after performing oxidation treatment (a) | | - | No | No | No | No |
| Visible light transmittance Tv of glass after performing oxidation treatment (b) | | % | 89.2 | 91.2 | 88.3 | 88.6 |
| ΔTv | | % | 11.9 | 4.8 | 11.0 | 11.3 |

**[Table 2] (continued)**

| | | Unit | Example 5 | Example 6 | Example 7 | Example 8 |
|---|---|---|---|---|---|---|
| **Glass-containing raw material** | | | | | | |
| Kind of glass | | - | C | D | B | B |
| Kind of external foreign substance | | - | No | No | SUS304 | Al |
| Amount of external foreign substance | | ppm by wt | | | 3000 | 3000 |
| Reduction treatment temperature | | °C | 1500 | 1500 | 1500 | 1500 |
| Kind of reducing agent | | - | C | C | C | C |
| Size of reducing agent | | mm | 3 to 10 | 3 to 10 | 3 to 10 | 3 to 10 |

| **Fine metal particle-containing glass** | | | | | | |
|---|---|---|---|---|---|---|
| Main component of fine metal particles | | - | Fe-Si-Co | Fe-Si-Sb | Fe-Si-Cr | Fe-Si |
| | More than 1 µm and 5 µm or less | Particles/mm² | 291.4 | 230.1 | 205.0 | 81.3 |
| Number density of fine metal particles | More than 5 µm and 10 µm or less | Particles/mm² | 2.4 | 2.2 | 0.6 | 1.1 |
| | More than 10 µm and 100 µm or less | Particles/mm² | 0.02 | 0.1 | 0.0 | 0.03 |
| | More than 100 µm and 500 µm or less | Particles/mm² | 0.0 | 0.0 | 0.0 | 0.0 |
| | More than 500 µm | Particles/mm² | 0.0 | 0.0 | 0.0 | 0.0 |
| Area ratio of fine metal particles | | % | 0.078 | 0.062 | 0.042 | 0.019 |
| ABS (Tv-T₁₁₀₀) | | % | 1.3 | 0.8 | 1.7 | 1.4 |
| Fe₂O₃ (Ave.) | | wt% | 0.16 | 0.07 | 0.10 | 0.12 |

| **Glass after oxidation treatment** | | | | | | |
|---|---|---|---|---|---|---|
| NWF after | | wt% | 74.0 | 74.9 | 73.6 | 74.0 |
| NWF after/before | | - | 1.03 | 1.01 | 0.99 | 1.00 |
| NWM after | | wt% | 25.1 | 24.9 | 26.2 | 25.7 |
| NWM after/before | | - | 0.93 | 1.00 | 1.05 | 1.03 |
| Presence or absence of fine metal particles in glass after performing oxidation treatment (a) | | - | No | No | No | No |
| Visible light transmittance Tv of glass after performing oxidation treatment (b) | | % | 89.8 | 89.5 | 87.9 | 88.6 |
| ΔTv | | % | 49.3 | 2.4 | 1.5 | 2.2 |

**[Table 2] (continued)**

| | | Unit | Example 9 | Example 10 | Example 11 |
|---|---|---|---|---|---|
| **Glass-containing raw material** | | | | | |
| Kind of glass | | - | B | B | C |
| Kind of external foreign substance | | - | No | SUS304 | No |
| Amount of external foreign substance | | ppm by wt | | 3000 | |
| Reduction treatment temperature | | °C | 1500 | 1500 | 1500 |
| Kind of reducing agent | | - | C | C | C |
| Size of reducing agent | | mm | < 0.074 | < 0.074 | < 0.074 |

| **Fine metal particle-containing glass** | | | | | |
|---|---|---|---|---|---|
| Main component of fine metal particles | | - | Fe-Si | Fe-Si-Cr-Ni | Fe-Si-Co |
| | More than 1 µm and 5 µm or less | Particles/mm² | 506.3 | 336.2 | 204.0 |
| Number density of fine metal particles | More than 5 µm and 10 µm or less | Particles/mm² | 2.3 | 3.4 | 8.0 |
| | More than 10 µm and 100 µm or less | Particles/mm² | 0.05 | 0.07 | 1.4 |
| | More than 100 µm and 500 µm or less | Particles/mm² | 0.0 | 0.0005 | 0.0 |
| | More than 500 µm | Particles/mm² | 0.0 | 0.0015 | 0.0 |
| Area ratio of fine metal particles | | % | 0.171 | 0.249 | 0.200 |
| ABS (Tv-T₁₁₀₀) | | % | 0.8 | 0.2 | 3.0 |
| Fe₂O₃ (Ave.) | | wt% | 0.45 | 0.47 | 0.73 |

| **Glass after oxidation treatment** | | | | | |
|---|---|---|---|---|---|
| NWF after | | wt% | 75.7 | 75.2 | 73.9 |
| NWF after/before | | - | 1.02 | 1.02 | 1.03 |
| NWM after | | wt% | 23.9 | 24.3 | 24.5 |
| NWM after/before | | - | 0.96 | 0.97 | 0.91 |
| Presence or absence of fine metal particles in glass after performing oxidation treatment (a) | | - | No | Yes | No |
| Visible light transmittance Tv of glass after performing oxidation treatment (b) | | % | 87.0 | 84.9 | 65.1 |
| ΔTv | | % | 0.6 | -1.5 | 24.6 |

**[Table 3]**

| | | Unit | Example 12 | Example 13 | Example 14 |
|---|---|---|---|---|---|
| **Glass-containing raw material** | | | | | |
| Kind of glass | | - | E | F | G |
| Kind of external foreign substance | | - | No | No | No |
| Amount of external foreign substance | | ppm by wt | | | |
| Reduction treatment temperature | | °C | 1550 | 1550 | 1550 |
| Kind of reducing agent | | - | C | C | C |
| Size of reducing agent | | mm | 3 to 10 | 3 to 10 | 3 to 10 |

| **Fine metal particle-containing glass** | | | | | |
|---|---|---|---|---|---|
| Main component of fine metal particles | | - | Fe-Si-Co-Cr | Fe-Si-Co-Ni | Fe-Si-Sb |
| | More than 1 µm and 5 µm or less | Particles/mm² | 104.0 | 64.8 | 85.2 |
| | More than 5 µm and 10 µm or less | Particles/mm² | 0.0 | 0.1 | 0.0 |
| Number density of fine metal particles | More than 10 µm and 100 µm or less | Particles/mm² | 0.0 | 0.0 | 0.0 |
| | More than 100 µm and 500 µm or less | Particles/mm² | 0.0 | 0.0 | 0.0 |
| | More than 500 µm | Particles/mm² | 0.0 | 0.0 | 0.0 |
| Area ratio of fine metal particles | | % | 0.012 | 0.008 | 0.010 |
| ABS (Tv-T₁₁₀₀) | | % | 1.1 | 0.0 | 0.7 |
| Fe₂O₃ (Ave.) | | wt% | 0.01 | 0.01 | 0.01 |

| **Glass after oxidation treatment** | | | | | |
|---|---|---|---|---|---|
| NWF after | | wt% | 74.9 | 75.1 | 74.9 |
| NWF after/before | | - | 1.03 | 1.01 | 1.03 |
| NWM after | | wt% | 25.1 | 24.9 | 25.1 |
| NWM after/before | | - | 1.00 | 1.00 | 0.93 |
| Presence or absence of fine metal particles in glass after performing oxidation treatment (a) | | - | No | No | No |
| Visible light transmittance Tv of glass after performing oxidation treatment (b) | | % | 91.2 | 91.3 | 91.8 |
| ΔTv | | % | 34.8 | 39.7 | 0.1 |

**[Table 3] (continued)**

| | | Unit | Example 15 | Example 16 |
|---|---|---|---|---|
| **Glass-containing raw material** | | | | |
| Kind of glass | | - | H | I |
| Kind of external foreign substance | | - | No | No |
| Amount of external foreign substance | | ppm by wt | | |
| Reduction treatment temperature | | °C | 1550 | 1550 |
| Kind of reducing agent | | - | C | C |
| Size of reducing agent | | mm | 3 to 10 | 3 to 10 |

| **Fine metal particle-containing glass** | | | | |
|---|---|---|---|---|
| Main component of fine metal particles | | - | Fe-Si-Cr-Zn-Pb | Fe-Si-Co-Cr-Mn-Cu |
| | More than 1 µm and 5 µm or less | Particles/mm² | 204.2 | 159.8 |
| | More than 5 µm and 10 µm or less | Particles/mm² | 0.1 | 0.0 |
| Number density of fine metal particles | More than 10 µm and 100 µm or less | Particles/mm² | 0.0 | 0.0 |
| | More than 100 µm and 500 µm or less | Particles/mm² | 0.0 | 0.0 |
| | More than 500 µm | Particles/mm² | 0.0 | 0.0 |
| Area ratio of fine metal particles | | % | 0.027 | 0.020 |
| ABS (Tv-T₁₁₀₀) | | % | 0.6 | 0.9 |
| Fe₂O₃ (Ave.) | | wt% | 0.03 | 0.02 |

| **Glass after oxidation treatment** | | | | |
|---|---|---|---|---|
| NWF after | | wt% | 75.1 | 74.7 |
| NWF after/before | | - | 0.99 | 0.98 |
| NWM after | | wt% | 24.9 | 25.2 |
| NWM after/before | | - | 1.04 | 1.10 |
| Presence or absence of fine metal particles in glass after performing oxidation treatment (a) | | - | No | No |
| Visible light transmittance Tv of glass after performing oxidation treatment (b) | | % | 88.5 | 87.2 |
| ΔTv | | % | 43.6 | 37.0 |

**[Table 3] (continued)**

| | | Unit | Example 17 | Example 18 | Example 19 |
|---|---|---|---|---|---|
| **Glass-containing raw material** | | | | | |
| Kind of glass | | - | J | K | L |
| Kind of external foreign substance | | - | No | No | No |
| Amount of external foreign substance | | ppm by wt | | | |
| Reduction treatment temperature | | °C | 1500 | 1500 | 1500 |
| Kind of reducing agent | | - | C | C | C |
| Size of reducing agent | | mm | 3 to 10 | 3 to 10 | 3 to 10 |

| **Fine metal particle-containing glass** | | | | | |
|---|---|---|---|---|---|
| Main component of fine metal particles | | - | Fe-Si | Fe-Si | Fe-Si |
| | More than 1 µm and 5 µm or less | Particles/mm² | 435.2 | 153.7 | 293.5 |
| | More than 5 µm and 10 µm or less | Particles/mm² | 3.7 | 0.1 | 0.0 |
| Number density of fine metal particles | More than 10 µm and 100 µm or less | Particles/mm² | 0.0 | 0.0 | 0.0 |
| | More than 100 µm and 500 µm or less | Particles/mm² | 0.0 | 0.0 | 0.0 |
| | More than 500 µm | Particles/mm² | 0.0 | 0.0 | 0.0 |
| Area ratio of fine metal particles | | % | 0.085 | 0.015 | 0.041 |
| ABS (Tv-T₁₁₀₀) | | % | 0.2 | 0.0 | 0.0 |
| Fe₂O₃ (Ave.) | | wt% | 0.39 | 0.20 | 0.41 |

| **Glass after oxidation treatment** | | | | | |
|---|---|---|---|---|---|
| NWF after | | wt% | 84.0 | 84.1 | 87.3 |
| NWF after/before | | - | 1.02 | 1.00 | 0.99 |
| NWM after | | wt% | 15.3 | 13.5 | 10.2 |
| NWM after/before | | - | 0.90 | 1.04 | 1.02 |
| Presence or absence of fine metal particles in glass after performing oxidation treatment (a) | | - | No | No | No |
| Visible light transmittance Tv of glass after performing oxidation treatment (b) | | % | 86.5 | 89.5 | 88.9 |
| ΔTv | | % | 0.7 | 5.8 | 7.1 |

As shown in Tables 2 and 3, the glasses obtained by subjecting the fine metal particle-containing glasses in Examples 1 to 8 and 12 to 19, which are Working Examples, to an oxidation treatment do substantially not contain fine metal particles having a particle diameter of 1 µm or more, and are each a high quality glass having a relatively large visible light transmittance Tv and few defects and reduced unnecessary coloring. On the other hand, in the glasses obtained by subjecting the fine metal particle-containing glasses in Examples 9 to 11 to an oxidation treatment, the fine metal particles remain, or the concentration of the coloring component such as Fe₂O₃ in the glass is not sufficiently reduced with respect to the glass-containing raw material, and the visible light transmittance is relatively small, resulting in a poor quality.

As described above, the following matters are disclosed in the present description.
1. A fine metal particle-containing glass, which is a glass containing fine metal particles, in which
   a number density of the fine metal particles for each particle diameter in any cross section of the glass is in the following ranges, and
   an area ratio of the fine metal particles in the any cross section of the glass is 0% to 0.15% with respect to a total area of the any cross section,
   particle diameter of more than 1 µm and 5 µm or less: 0 to 1,000 particles/mm²,
   particle diameter of more than 5 µm and 10 µm or less: 0 to 30 particles/mm²,
   particle diameter of more than 10 µm and 100 µm or less: 0 to 5 particles/mm²,
   particle diameter of more than 100 µm and 500 µm or less: 0 to 0.5 particles/mm²,
   particle diameter of more than 500 µm: substantially not contained.
2. The fine metal particle-containing glass according to the above 1, in which an absolute value ABS (Tv-T₁₁₀₀) of a difference between a visible light transmittance Tv at a thickness of 2 mm and a transmittance T₁₁₀₀ at a wavelength of 1100 nm at a thickness of 2 mm is 30% or less.
3. The fine metal particle-containing glass according to the above 1 or 2, in which the fine metal particles contain at least one element selected from the group consisting of Fe, Si, Co, Cr, Ni, Ti, P, Sb, W, and Nb.
4. The fine metal particle-containing glass according to any one of the above 1 to 3, in which when a melt obtained by melting the fine metal particle-containing glass is subjected to an oxidation treatment by bubbling using an atmosphere at 1,500°C for 120 minutes to obtain a glass, the obtained glass has a visible light transmittance Tv of 50% or more at a thickness of 2 mm.
5. The fine metal particle-containing glass according to any one of the above 1 to 4, in which
   in terms of mass% based on oxides,
   when a melt obtained by melting the fine metal particle-containing glass is subjected to an oxidation treatment by bubbling using an atmosphere at 1,500°C for 120 minutes to obtain a glass,
      a ratio NWF_{after/before} is 0.40 to 1.50, the ratio NWF_{after/before} being a ratio of a total content of a network former oxide in the obtained glass to a total content of the network former oxide in the fine metal particle-containing glass, and
      a ratio NWM_{after/before} is 0.60 to 2.00, the ratio NWM_{after/before} being a ratio of a total content of a network modifier oxide in the obtained glass to a total content of the network modifier oxide in the fine metal particle-containing glass.
6. The fine metal particle-containing glass according to any one of the above 1 to 5, in which an average concentration of Fe₂O₃ in the fine metal particle-containing glass is 0.001% to 0.5% in terms of mass% based on oxides.
7. The fine metal particle-containing glass according to any one of the above 1 to 6, in which when a melt obtained by melting the fine metal particle-containing glass is subjected to an oxidation treatment by bubbling using an atmosphere at 1,500°C for 30 minutes to obtain a glass, the obtained glass does substantially not contain fine metal particles having a particle diameter of 1 µm or more.
8. The fine metal particle-containing glass according to any one of the above 1 to 7, in which a shape occupying 80% or more on a mass basis is a crushed piece shape or a spherical shape having a size of 1 mm to 100 mm.
9. A method for producing a fine metal particle-containing glass, which is a method for producing the fine metal particle-containing glass according to any one of the above 1 to 8, the method including:
   obtaining a melt by melting a glass-containing raw material containing a glass; and
   subjecting the melt to a reduction treatment.
10. The method for producing a fine metal particle-containing glass according to the above 9, in which in the reduction treatment, at least one selected from the group consisting of a simple substance and a compound that contain at least one element selected from the group consisting of C, Al, Si, Ca, Ti, and H, and a mixture containing the simple substance and the compound is used as a reducing agent.
11. The method for producing a fine metal particle-containing glass according to the above 10, in which the reducing agent contains at least one selected from the group consisting of a simple substance and a compound that contain at least one element selected from the group consisting of C, Si, and H, and a mixture containing the simple substance and the compound.
12. The method for producing a fine metal particle-containing glass according to any one of the above 9 to 11, in which a treatment temperature in the reduction treatment is 1,300°C to 1,800°C.

Although the present invention has been described in detail with reference to specific embodiments, it is apparent to those skilled in the art that various changes and modifications can be made without departing from the spirit and scope of the present invention. The present application is based on a Japanese Patent Application (Japanese Patent Application No. 2023-037657) filed on March 10, 2023, the contents of which are incorporated herein by reference.

## Claims

1. A fine metal particle-containing glass, which is a glass containing fine metal particles, wherein
a number density of the fine metal particles for each particle diameter in any cross section of the glass is in the following ranges, and
an area ratio of the fine metal particles in the any cross section of the glass is 0% to 0.15% with respect to a total area of the any cross section,
particle diameter of more than 1 µm and 5 µm or less: 0 to 1,000 particles/mm²,
particle diameter of more than 5 µm and 10 µm or less: 0 to 30 particles/mm²,
particle diameter of more than 10 µm and 100 µm or less: 0 to 5 particles/mm²,
particle diameter of more than 100 µm and 500 µm or less: 0 to 0.5 particles/mm²,
particle diameter of more than 500 µm: substantially not contained.

2. The fine metal particle-containing glass according to claim 1, wherein an absolute value ABS (Tv-T₁₁₀₀) of a difference between a visible light transmittance Tv at a thickness of 2 mm and a transmittance T₁₁₀₀ at a wavelength of 1100 nm at a thickness of 2 mm is 30% or less.

3. The fine metal particle-containing glass according to claim 1 or 2, wherein the fine metal particles contain at least one element selected from the group consisting of Fe, Si, Co, Cr, Ni, Ti, P, Sb, W, and Nb.

4. The fine metal particle-containing glass according to claim 1 or 2, wherein when a melt obtained by melting the fine metal particle-containing glass is subjected to an oxidation treatment by bubbling using an atmosphere at 1,500°C for 120 minutes to obtain a glass, the obtained glass has a visible light transmittance Tv of 50% or more at a thickness of 2 mm.

5. The fine metal particle-containing glass according to claim 1 or 2, wherein
in terms of mass% based on oxides,
when a melt obtained by melting the fine metal particle-containing glass is subjected to an oxidation treatment by bubbling using an atmosphere at 1,500°C for 120 minutes to obtain a glass,
a ratio NWF_{after/before} is 0.40 to 1.50, the ratio NWF_{after/before} being a ratio of a total content of a network former oxide in the obtained glass to a total content of the network former oxide in the fine metal particle-containing glass, and
a ratio NWM_{after/before} is 0.60 to 2.00, the ratio NWM_{after/before} being a ratio of a total content of a network modifier oxide in the obtained glass to a total content of the network modifier oxide in the fine metal particle-containing glass.

6. The fine metal particle-containing glass according to claim 1 or 2, wherein an average concentration of Fe₂O₃ in the fine metal particle-containing glass is 0.001% to 0.5% in terms of mass% based on oxides.

7. The fine metal particle-containing glass according to claim 1 or 2, wherein when a melt obtained by melting the fine metal particle-containing glass is subjected to an oxidation treatment by bubbling using an atmosphere at 1,500°C for 30 minutes to obtain a glass, the obtained glass does substantially not contain fine metal particles having a particle diameter of 1 µm or more.

8. The fine metal particle-containing glass according to claim 1 or 2, wherein a shape occupying 80% or more on a mass basis is a crushed piece shape or a spherical shape having a size of 1 mm to 100 mm.

9. A method for producing a fine metal particle-containing glass, which is a method for producing the fine metal particle-containing glass according to claim 1 or 2, the method comprising:
obtaining a melt by melting a glass-containing raw material containing a glass; and
subjecting the melt to a reduction treatment.

10. The method for producing a fine metal particle-containing glass according to claim 9, wherein in the reduction treatment, at least one selected from the group consisting of a simple substance and a compound that contain at least one element selected from the group consisting of C, Al, Si, Ca, Ti, and H, and a mixture containing the simple substance and the compound is used as a reducing agent.

11. The method for producing a fine metal particle-containing glass according to claim 10, wherein the reducing agent contains at least one selected from the group consisting of a simple substance and a compound that contain at least one element selected from the group consisting of C, Si, and H, and a mixture containing the simple substance and the compound.

12. The method for producing a fine metal particle-containing glass according to claim 9, wherein a treatment temperature in the reduction treatment is 1,300°C to 1,800°C.
